# EUROPÄISCHE PATENTSCHRIFT

(11) **EP 0 372 178 B1**
(45) Veröffentlichungstag und Bekanntmachung des Hinweises auf die Patenterteilung: **12.05.1993**
(21) Anmeldenummer: 89117367.6
(22) Anmeldetag: 20.09.1989
(51) Int. Cl.: D21G 1/02, D21G 1/00, F16C 13/00

(54) **Kalander**
Calander
Calandre

(30) Priorität: 08.12.1988 DE 3841360
(43) Veröffentlichungstag der Anmeldung: 13.06.1990
(73) Patentinhaber: Eduard Küsters Maschinenfabrik GmbH & Co. KG, 47805 Krefeld (DE)
(72) Erfinder: Brendel, Bernhard, D-4155 Grefrath 2 (DE); Funger, Bernhard, D-4150 Krefeld 29 (DE)
(74) Vertreter: Palgen, Peter, Dr. Dipl.-Phys.

(56) Entgegenhaltungen:
- DE-A- 2 623 492
- DE-A- 3 200 490
- DE-A- 3 328 779
- GB-A- 2 068 504
- GB-A- 2 098 304
- GB-A- 2 102 913
- GB-A- 2 178 510
- DAS PAPIER, Band 40, Nr. 10, Oktober 1986, Seiten 485-495, Darmstadt, DE; G.CHRIST et al.: "Die Voith-Profilwalze, zwei Jahre erfolgreich in Betrieb"
- PATENT ABSTRACTS OF JAPAN, Band 6, Nr. 36 (M-115)[914], 5. März 1982; JP-A-56 151 107 (YODOGAWA SEIKOSHO)

## Beschreibung

Die Erfindung bezieht sich auf einen Kalander der dem Oberbegriff des Anspruchs 1 entsprechenden Art.

Mit dem Ausdruck "hydraulisch innenabgestützt" sollen alle Arten von Walzen erfaßt sein, die ein undrehbares Querhaupt aufweisen, um welches eine Hohlwalze drehbar ist, gegen deren Innenumfang am Querhaupt angebrachte hydraulische Kraftausübungseinrichtungen wirken. In Betracht kommen also hydraulisch innenabgestützte Walzen mit einzelnen Stützstempeln nach der US-A 31 19 324 oder der DE-A 22 30 139, als sogenannte Schwimmende Walze ausgebildete Walzen nach der DE-B 10 26 609 oder Walzen mit über die Länge der Walze durchgehenden stegartigen Druckkolben nach der DE-A 14 60 066. Den vorgenannten Walzen ist gemeinsam, daß das Querhaupt aus der Hohlwalze an den Enden hervorsteht und dort die äußeren Kräfte eingeleitet werden.

Ein besonderes Anwendungsbeispiel für einen gattungsgemäßen Kalander ist der Folienziehkalander nach der DE-C1 33 29 595, bei welchem das Querhaupt nur einseitig aus der Hohlwalze hervorsteht und die äußeren Kräfte auf axiale Ansätze der Hohlwalze selbst aufgebracht werden. Die Lager, auf denen die Hohlwalze an ihren Enden in ihrem Innern auf dem Querhaupt abgestützt ist, müssen die gesamten, von der nach Art einer Schwimmenden Walze ausgebildeten hydraulischen Längskammer erzeugten Kräfte übertragen. Sie müßten also an sich sehr kräftig dimensioniert sein. Dafür steht aber im Innern der Hohlwalze zu wenig Raum zur Verfügung. Es können tatsächlich nur Lager eingesetzt werden, die unterdimensioniert sind und die Gesamtkräfte auf Dauer nicht übertragen können. Die konstruktive Lösung dieses Problems besteht darin, daß neben diesen Lagern hydraulische Kammern vorgesehen sind, die ebenfalls Kräfte vom Querhaupt auf die Enden der Hohlwalze übertragen und die Lager um diesen Betrag entlasten.

Aus der JP-A 56-151107 ist eine dem Oberbegriff des Anspruchs 1 entsprechende Walzenkonfiguration in Gestalt eines Walzwerks zum Walzen von Blechen bekannt, bei welchem die Unterwalze eine Schwimmende Walze nach der DE-B 10 26 609 ist, die einseitig gegen eine bombierte Oberwalze wirkt. Es soll damit im Betrieb, also bei der Bearbeitung der Blechbahn, ein gerader Walzspalt aufrechterhalten werden können.

Wenn bei einem Kalander der einen oder anderen dieser Arten der Walzspalt geöffnet ist, hängt die Oberwalze unter ihrem Gewicht ein wenig durch. Wenn dann die hydraulisch innenabgestützte Unterwalze nach oben angestellt wird, findet zunächst eine Anlage in der Mitte statt. Bei Fortsetzung der Anstellbewegung breitet sich der Anlagebereich aus. Zur Vermeidung einer Durchbiegung der Unterwalze ist dazu in dieser ein gewisser hydraulischer Druck notwendig. Es gibt dann einen Punkt, bei welchem die Obervalze auf der Unterwalze mit einer bestimmten Linienkraft über die Breite der Bahn gleichmäßig anliegt. Diese Linienkraft ist die untere Grenze der in der Praxis brauchbaren Linienkraft im Walzspalt.

Es kann dann der Druck in der hydraulisch innenabgestützten Walze unter Beibehaltung der Gleichmäßigkeit über die Bahnbreite bis zu einem apparatebedingten Höchstdruck gesteigert werden, dem eine höchsterreichbare Linienkraft entspricht. Dabei findet ein fortlaufender sorgfältiger Abgleich der durch die hydraulische Innenabstützung erzeugten Kräfte und der an den Enden der hydraulisch innenabgestützten Walze aufgebrachten Kräfte statt.

Der Bereich zwischen der unteren Grenze und der erwähnten höchsterreichbaren Linienkraft ist der verwertbare Arbeitsbereich, das sogenannte Linienkraftfenster, dessen untere Grenze also in einer gewissen Höhe liegt.

Bei bestimmten Arbeitsvorgängen, z.B. beim Doublieren von Tissues oder bei der Behandlung von Vliesen oder Folien, sind das Vorhandensein einer unteren Grenze der gleichmäßig fahrbaren Linienkraft, in anderen Fällen das Vorhandensein einer oberen Grenze hinderlich.

Der Erfindung liegt die Aufgabe zugrunde, das Linienkraftfenster zu erweitern.

Diese Aufgabe ist durch die in Anspruch 1 wiedergegebene Erfindung gelöst.

Eine doppelseitig wirksame hydraulisch innenabgestützte Walze soll eine solche sein, deren innere hydraulische Abstützteinrichtungen in der Wirkebene wahlweise nach beiden Seiten Kräfte ausüben können, also nicht nur in Richtung vom Walzspalt hin, sondern auch in Richtung vom Walzspalt hinweg. Solche Walzen sind beispielsweise aus Fig. 9 der DE-A 22 30 139, aus der DE-C1 34 45 890 und aus der FR-A 15 36 535 bzw. der DE-B 19 47 927 bekannt.

Bei den bekannten Ausführungsformen dient die Doppelseitigkeit dazu, gleichzeitig unabhängig voneinander steuerbare Linienkräfte nach zwei Seiten auszuüben, d.h. bei den bekannten Ausführungsformen arbeiten die doppelseitig wirksamen hydraulisch innenabgestützten Walzen jeweils mit zwei von verschiedenen Seiten in der Wirkebene an ihnen anliegenden Gegenwalzen zusammen.

Bei der Erfindung ist dies nicht so. Die dem Walzspalt abgewandte Seite der hydraulisch innenabgestützten Walze liegt frei, d.h. es liegt dort keine Gegenwalze an.

Der Grund für die Wahl einer doppelseitig wirksamen hydraulisch innenabgestützten Walze mit Lagern an den Enden liegt vielmehr darin, daß derartige Walzen durch die wahlweise in der einen oder anderen Richtung wirkenden hydraulischen Kraftausübungseinrichtungen nach verschiedenen Seiten bewußt durchgebogen werden können.

Bei der Erfindung wird die Durchbiegung nach der dem Walzspalt abgelegenen Seite hin ausgenutzt. Wenn der Walzspalt geöffnet ist und die Oberwalze ein wenig durchhängt, kann durch die bewußte Durchbiegung die Unterwalze an die hängende Biegelinie der Oberwalze angepaßt und mit angepaßter Biegelinie an die Oberwalze angestellt werden. Es läßt sich auf diese Weise ein über die Bahnbreite gleichmäßiger Linienkraftverlauf schon bei einer Linienkraft von praktisch Null erzielen, d.h. es gibt keine untere Grenze mehr, oberhalb deren der Kalander nur betrieben werden kann. Bei einer nur nach oben durchbiegbaren Unterwalze läge schon ein gewisser Liniendruck vor, bis der Durchhang der Oberwalze ausgeglichen und eine gleichmäßige Linienkraft erreicht wäre. Bei der Erfindung hingegen ist das Liniendruckfenster nach unten bis gegen Null hin erweitert. Von der gleichmäßigen Anlage der Walzen bei der Linienkraft Null ausgehend, wird sodann die Kraft der die Unterwalze vom Walzspalt hinweg durchbiegenden inneren hydraulischen Stützeinrichtung bis auf Null abgesenkt und dann die Kraft der gegen den Walzspalt hin wirkenden inneren hydraulischen Stützeinrichtung von Null an erhöht, bis in dieser der mögliche Maximaldruck erreicht ist. Die sich dabei einstellende Linienkraft ist die obere Grenze des Linienkraftfensters. Die Veränderung der Drücke in den hydraulischen Stützeinrichtungen geschieht stets in Abstimmung mit den von den äußeren Belastungseinrichtungen auf die Enden des Querhaupts ausgeübten Kräften.

Das Merkmal der doppelseitigen Wirksamkeit der Unterwalze wirkt mit der Bombierung der Oberwalze zusammen.

Bei einer bombierten Oberwalze ist die von der hydraulisch innenabgestützten Walze durch entsprechende Durchbiegung vom Walzspalt hinweg auszugleichende Biegeverformung die Summe aus der durch den Durchhang und der durch die Bombierung sich ergebenden Abweichung von der Horizontalen. Die Unterwalze muß also entsprechend stärker vom Walzspalt hinweg vorgebogen werden, um eine gleichmäßige Anlage bei der Linienkraft Null zu erreichen. Wenn dann die Durchbiegung vom Walzspalt hinweg reduziert wird, wird irgendwann die Biegelinie erreicht, die der kräftefreien Biegelinie einer weniger oder nicht bombierten Walze entspricht. In diesem Moment ist aber bei der stärker bombierten Walze schon eine positive Linienkraft vorhanden. Bei weiterer Reduzierung der vom Walzspalt hinwegweisenden Durchbiegung und beim Übergang auf eine zum Walzspalt hinweisende Durchbiegung bis zur apparatebedingten Druckgrenze sind die Verhältnisse wie bei der geringer oder nicht bombierten Walze, d.h. bis zum Erreichen der oberen Druckgrenze ergibt sich die gleiche Linienkraftsteigerung. Die obere Grenze der Linienkraft erhöht sich also um die erwähnte vorher schon vorhandene positive Linienkraft. Durch das Zusammenspiel von Doppelseitigkeit und Bombage läßt sich also das Liniendruckfenster einerseits auf Null herunterziehen, andererseits nach oben erhöhen.

Die Erfindung kommt gemäß Anspruch 2 für Kalander in Betracht, bei denen bei der hydraulisch innenabgestützten Walze die äußeren Kräfte auf die Enden des Querhaupts wirken.

Eine alternativ mögliche Ausführungsform umfaßt jedoch eine hydraulisch innenabgestützte Walze, bei der die äusseren Kräfte auf die Enden der Hohlwalze wirken (Anspruch 3), wie es aus der DE-C1 33 29 595 bekannt ist.

Im Hinblick auf den Folienziehkalander nach der DE-C1 33 29 595 ergibt sich ein wichtiger zusätzlicher Vorteil der Erfindung. Wenn nämlich die Folienziehwalze als doppelseitig wirksame hydraulisch innenabgestützte Walze ausgebildet wird, kann eine über die Breite der Bahn gleichmäßige Linienkraftverteilung schon bei sehr geringen Liniendrücken erreicht werden. Durch diese Öffung des Liniendruckfensters nach unten geht also kein Druck in der hydraulisch innenabgestützten Walze für die bloße Erreichung einer gleichmäßigen Anlage mehr verloren. Der gesamte Druck kann für die Erzeugung der Linienkraft dienen. Dadurch kann der Druck in der hydraulisch innenabgestützten Walze abgesenkt werden und können die zur Entlastung der Lager dienenden hydraulischen Seitenkammern unter Umständen in einigen Fällen sogar eingespart werden, die einschließlich der Mittel zur ihrer Druckversorgungen einen erheblichen zusätzlichen Aufwand darstellten.

Um bei Kalandern der letztgenannten Art störende Biegemomente auszuschalten, empfiehlt sich die Ausgestaltung nach Anspruch 4, bei der also die äußeren und inneren Lager auf gleicher Höhe liegen. Es ist aber auch nicht ausgeschlossen, daß die inneren Lager einen größeren gegenseitigen Abstand haben als die äußeren Lager.

Wenn die hydraulisch innenabgestützte Walze nach der DE-C1 33 29 595 ausgebildet ist, also in der Nähe der inneren Lager mit Druckflüssigkeit füllbare sogenannte Seitenkammern aufweist, ist eine separate Versorgung mit temperierbarer Druckflüssigkeit nach Anspruch 5 zweckmäßig. Hierdurch kann das Temperaturprofil an den Rändern der Arbeitsbreite beeinflußt werden.

Eine weitere Ausgestaltung zur Vermeidung von Randproblemen ist Gegenstand des Anspruchs 6. Auch hierdurch wird der Entstehung von unerwünschten Biegemomenten vorgebeugt, die auftreten können, wenn die Länge der Kraftausübung im Innern der Hohlwalze eine andere ist als die Länge der Gegendruckausübung durch die Warenbahn.

In der Zeichnung sind Ausführungsbeispiele der Erfindung schematisch dargestellt, wobei die Durchbiegungen der Walzen aus Gründen der Deutlichkeit stark übertrieben dargestellt sind.
Fig. 1 und 3 bis 5 zeigen Ansichten eines Kalanders in Laufrichtung der Bahn, teilweise im Schnitt;
Fig. 2 gibt das Durchmesserprofil längs der bombierten Oberwalze wieder;
Fig. 6 zeigt eine Ansicht einer weiteren Ausführungsform des Kalanders.

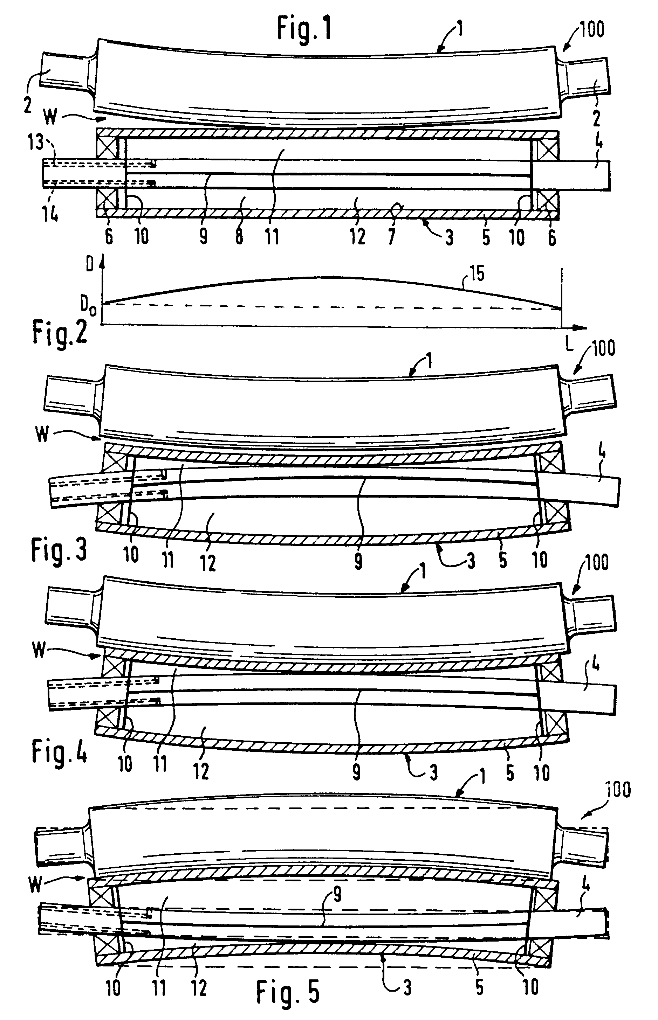

Der in Fig. 1 dargestellte, als Ganzes mit 100 bezeichnete Kalander umfaßt eine Oberwalze 1 herkömmlicher, d.h. massiver Bauart, die mit ihren Walzenzapfen 2 im Walzenständer gelagert ist. Die Oberwalze 1 weist eine Bombage in der Weise auf, daß sie in der Mitte etwas dicker ist als an den Enden, beispielsweise 100 My bei einer mehrere Meter langen Walze. Zur Verdeutlichung ist der Verlauf der Dicke D über der Länge L der Oberwalze in Fig. 2 in einer Kurve 15 dargestellt, wobei Do der Durchmesser an den Enden des Walzenballens sein soll und der Durchmesser D, auf beiden Seiten von Do ausgehend, zur Mitte hin zunimmt.

Die Unterwalze 3 ist als doppelseitig wirksame hydraulisch innenabgestützte Walze ausgebildet. Sie umfaßt ein stillstehendes Querhaupt 4, um welches eine Hohlwalze 5 drehbar ist, die an den Enden auf Lagern 6 auf dem Querhaupt gelagert ist. Die äußeren Kräfte, die mit der durch die nicht dargestellte Warenbahn erzeugten Linienkraft im Gleichgewicht stehen, werden an den aus der Hohlwalze 3 hervorstehenden Enden des Querhaupts 4 aufgebracht. Zwischen dem Innenumfang 7 der Hohlwalze 5 und dem Außenumfang des Querhaupts 4 besteht allseitig ein Zwischenraum 8, der durch zu beiden Seiten des Querhaupts 4 an diesem angebrachte Längsdichtungen 9 sowie innenseitig der Lager 6 angebrachte Endquerdichtungen 10 in eine auf der Seite des Walzspalts W gelegene halbzylinderschalenförmige Längskammer 11 und eine auf der dem Walzspalt W abgelegenen Seite gelegene Längskammer 12 unterteilt ist. Die Längskammer 11 kann durch eine Zuleitung 13, die Längskammer 12 durch eine Zuleitung 14 jeweils in dem Querhaupt 4 mit Druckflüssigkeit gefüllt werden. In Wirklichkeit füllt das Querhaupt 4 den Innenraum der Hohlwalze 5 fast aus, d.h. der Zwischenraum 8 hat in radialer Richtung eine wesentlich geringere Erstreckung als dargestellt.

Wenn die Längskammer 11 mit Druckflüssigkeit gefüllt wird, übt diese eine gemäß Fig. 1 nach oben, d.h. gegen den Walzspalt W gerichtete gleichmäßige Kraft gegen die Innenwalze 7 der Hohlwalze 5 aus. Die Druckflüssigkeit stützt sich über die Dichtungen 9,10 an dem Querhaupt 4 ab, welches sich unter dieser Belastung nach unten durchbiegt und somit die Belastung von der Hohlwalze 5 fernhält. Entsprechendes gilt bei einer Füllung der unteren Längskammer 12; dabei wird eine gleichmäßige Kraft gegen den Innenumfang 7 der Hohlwalze 5 nach unten ausgeübt. Dies ist mit dem Ausdruck "doppelseitig wirkend" gemeint. Es kann wahlweise eine Kraft nach oben oder nach unten ausgeübt werden. Die Längskammern 11,12 liegen symmetrisch zur Wirkebene der Walze 3, d.h. zu der durch die Achsen des Walzenpaars 1,3 gehenden Ebene. Wegen der Lager 6 an den Enden der Hohlwalze 5 kann diese je nach Druckgabe in den Längskammern 11,12 wahlweise nach oben oder unten durchgebogen werden.

In Fig. 1 ist die Walze 3 drucklos. Die Oberwalze 1 hängt unter ihrem Gewicht durch. Es ist der Zustand dargestellt, daß die Oberwalze 1 die Oberseite der Hohlwalze 5 in der Mitte berührt. Hier liegt also ein gewisser Liniendruck vor, während in den Randbereichen der Walzspalt W noch aufklafft und kein Liniendruck gegeben sit.

Es wäre jetzt möglich, die Unterwalze 3 gegen die Oberwalze 1 anzustellen; dabei würde sich der Anlagebereich in der Mitte ausbreiten. Die Unterwalze könnte gegen die von oben auf sie wirkenden Kräfte durch allmähliche Druckgabe in die Längskammer 11 geradegehalten werden. Durch fortgesetztes Anstellen der Unterwalze 3 gegen die Oberwalze 1 könnten der Walzspalt W geschlossen und bei einer bestimmten Linienkraft, der ein bestimmter Druck in der Längskammer 11 entspricht, eine gleichmäßige Anlage über die Bahnbreite erzielt werden. Unterhalb dieser Linienkraft ist eine gleichmäßige Anlage nicht möglich. Sie stellt also die untere Grenze des brauchbaren Arbeitsbereichs bei der geschilderten Arbeitsweise dar.

Nun ist aber die Unterwalze 3 doppelseitig wirksam, und es kann in der aus Fig. 3 ersichtlichen Weise durch Füllung der Längskammer 12 wegen des Vorhandenseins der Lager 6 eine gezielte Durchbiegung der Hohlwalze 5 vom Walzspalt W hinweg erzielt werden. Diese Durchbiegung wird so gesteuert, daß die Biegelinie aus der Oberseite der Hohlwalze 5 der Biegelinie der Unterseite der Oberwalze 1 entspricht und der in Fig. 3 geöffnet dargestellte Walzspalt W also eine über die Arbeitsbreite gleichmäßige Spaltbreite aufweist.

Wenn dann die Unterwalze 3 gemäß Fig. 4 nach oben gegen die Oberwalze 1 angestellt wird, so ist die Gleichmäßigkeit der Anlage in dem Walzspalt W schon gegeben, ohne daß darin eine wesentliche Linienkraft herrschen muß. Durch die Durchbiegbarkeit der Unterwalze 3 vom Walzspalt W hinweg ist also eine gleichmäßige Anlage über die Bahnbreite "von Anfang an" möglich.

Um die Linienkraft von dem Wert Null zu steigern, wird von dem Zustand nach Fig. 4 ausgehend der Druck in der Längskammer 12 abgesenkt und der Druck in der Längskammer 11 gesteigert. Dadurch wird die Walze 1 in der Mitte zunächst angehoben und über einen Zwischenzustand, in dem die Walzen 1,3 gerade sind und der in Fig. 5 gestrichelt angedeutet ist, der in Fig. 5 ausgezogen wiedergegebene Endzustand erreicht, in welchem in der Längskammer 11 der maximal mögliche Druck herrscht und die Oberwalze 1 nach oben durchgebogen ist. In dem Walzspalt W herrscht dann die maximal mögliche Linienkraft. Das Linienkraftfenster erstreckt sich von dem Wert Null gemäß Fig. 4 bis zu dem Maximalwert der Fig. 5.

Der Maximalwert kann gesteigert werden, indem die Walze 1 bombiert wird, d.h. in der Mitte einen geringfügig, d.h. größenordnungsmäßig 100 My größeren Durchmesser aufweist. Auch der tatsächlich vorkommende Durchhang der Oberwalze 1 liegt im Bereich von einigen zehntel Millimetern. Diese Werte erscheinen angesichts der Dimensionen der Walzen von 50 cm bis 80 cm Durchmesser und fünf und mehr Meter Länge geringfügig, haben aber auf die Liniendruckverteilung und die Behandlung des Papiers, der Kunststoffolie oder dergleichen einen großen Einfluß.

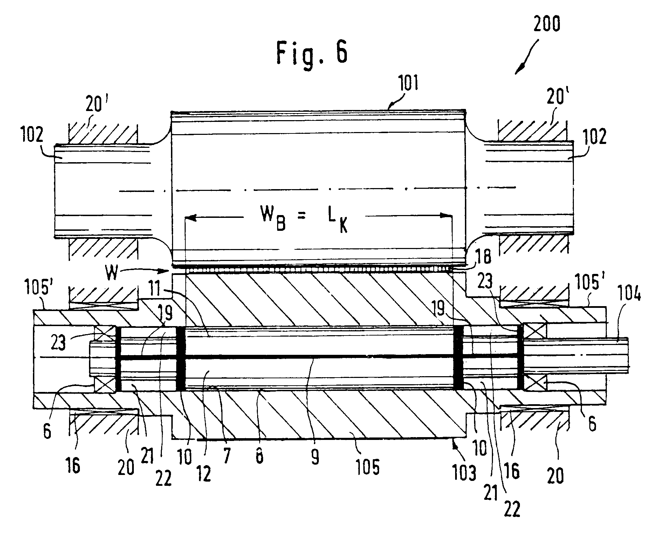

Der in Fig. 6 dargestellte, als Ganzes mit 200 bezeichnete Kalander umfaßt wiederum eine Oberwalze 101 massiver Bauart, die mit ihren Walzenzapfen 102 am Walzenständer 20 oder einer Schwinge 20' gelagert ist. Die Oberwalze 101 weist eine Bombage des Walzenballens auf, die dem in Fig. 2 dargestellten Verlauf entspricht.

Die Unterwalze 103 ist als doppelseitig wirksame Schwimmende Walze ausgebildet. Sie umfaßt ein stillstehendes Querhaupt 104, um welches eine Hohlwalze 105 drehbar ist, die an den Enden auf Lagern 6 auf dem Querhaupt 104 gelagert ist. Während aber beim Kalander 100 die äußeren Kräfte auf die aus der Hohlwalze 5 hervorstehenden Enden des Querhaupts 4 aufgebracht wurden, besitzt die Unterwalze 103 an den Enden der Hohlwalze 105 axiale zylindrische Ansätze 105', auf denen Lager 16 angeordnet sind, die sich im Walzenständer 20 abstützten. Die äußeren Kräfte werden hier also direkt in die Hohlwalze 105 von außen eingeleitet.

Die inneren Lager 6 befinden sich in Höhe der Lager 16, so daß durch die Lager 6,16 keine Biegemomente auf die Hohlwalze 105 ausgeübt werden.

Zwischen dem Innenumfang 7 der Hohlwalze 105 und dem Außenumfang des Querhauptes 104 besteht allseitig ein Zwischenraum 8, der durch zu beiden Seiten des Querhaupts 104 an diesem angebrachte Längsdichtungen 9 sowie im Bereich der Enden der Hohlwalze 105 angebrachte Endquerdichtungen 10 in eine auf der Seite des Walzspalts W gelegene halbyzlinderschalenförmige Längskammer 11 (sogenannte S-Walzenkammer) und eine auf der dem Walzspalt W abgelegenen Seite gelegene halbzylinderschalenförmige Längskammer 12 unterteilt ist.

Axial außerhalb der Endquerdichtungen 10, jedoch innerhalb der Lager 6 sind weitere Endquerdichtungen 23 vorgesehen, die als halbzylinderschalenförmige Längskammern ausgebildete Seitenkammern 21,22 abteilen, die durch die Längsdichtungen 9 fortsetzende Längsdichtungen 19 voneinander getrennt sind.

Die Längskammern 11 bzw. 12 sowie 21 bzw. 22 können separat voneinander mit Druckflüssigkeiten verschiedenen Drucks und verschiedener Temperatur beaufschlagt werden. Wird die obere Längskammer 11 mit Druckflüssigkeit beaufschlagt bzw. mit Druckflüssigkeit unter einem höheren Druck als die Längskammer 12 beaufschlagt, so erfährt die Hohlwalze 105 von innen eine Kraft, die sie gemäß Fig. 6 nach oben durchzubiegen bestrebt ist. Die Gegenkräfte werden über die Lager 6 auf das Querhaupt 104 abgeleitet. Da die Lagerbelastung erheblich ist, wird bei Beaufschlagung der Längskammer 11 in den unteren Seitenkammern 21 ein Druck erzeugt, der einen Teil der in der Längskammer 11 erzeugten Kräfte abfängt und die Lager 6 davon entlastet.

Wird jedoch in der Längskammer 12 ein Druck bzw. ein höherer Druck als in der Längskammer 11 hervorgerufen, so wird die Hohlwalze 105 vom Walzspalt W hinweg nach unten durchgebogen, und es erfolgt die Entlastung der Lager 6 durch die Beaufschlagung der oberen Seitenkammern 22.

Die Unterwalze 103 kann also wahlweise nach oben oder nach unten durchgebogen werden, sie ist in diesem Sinne "doppelseitig wirkend".

In manchen Anwendungsfällen wird die den Längskammern 11 bzw. 12 zugeführte Druckflüssigkeit auf hohe Temperaturen beheizt, damit die Hohlwalze 105 mit einer entsprechend hohen Oberflächentemperatur auf die Warenbhan 18 einwirken kann. Die Temperatur an der Walzenoberfläche hat die Neigung, zum Ende des Walzenballens hin abzufallen. Um dem entgegenzuwirken, kann vorgesehen sein, daß auch die Temperatur der Druckflüssigkeit in den Seitenkammern 21 bzw. 22 erhöht ist, um dem Wärmeabfluß in die kälteren Ansätze 105' der Hohlwalze 105 entgegenzuwirken.

Die Zuleitungen zu den Längskammern 11,12,21,22 sind nicht dargestellt. Sie werden an dem in Fig. 6 rechten, aus dem Ansatz 105' hervorstehenden Ende des Querhaupts 104 angeschlossen, wo auch die Drehsicherung des Querhaupts 104 angreift.

Die Breite W_{B} der Warenbahn 18 ist in dem Ausführungsbeispiel der Fig. 6 gleich der Länge L_{K} der beiden Längskammern 11,12 gewählt, so daß an den Enden der Längskammern 11,12 bzw. an den Rändern der Warenbahn 18 keinerlei Überhang stattfindet und die Länge der Druckausübung durch die hydraulische Druckflüssigkeit mit dem Bereich des Gegendrucks der Warenbahn 18 übereinstimmt.

Die geschilderten Merkmale des Kalanders wirken dahin zusammen, einen optimal gleichmäßigen Linienkraftverlauf über die Länge des Walzspalts B zu erzielen und den Bereich der möglichen Linienkräfte von Null bis auf einen sonst möglichen Wert zu vergrößern. Die Bombage der massiven Walze 101 und die doppelseitige Wirksamkeit der Unterwalze 103 ergänzen sich dabei in der für den Kalander 100 im einzelnen beschriebenen Weise.

## Patentansprüche

1. Kalander
mit einer hydraulisch innenabgestützten Walze als Unterwalze (3,103), welche ein undrehbares Querhaupt (4,104), eine um das Querhaupt (4,104) drehbare, an den Enden auf dem Querhaupt (4,104) gelagerte Hohlwalze (5,105) sowie an dem Querhaupt (4,104) angebrachte, gegen den Innenumfang (7) der Hohlwalze (5,105) wirkende Kraftausübungseinrichtungen umfaßt,
und mit einer damit den Walzspalt (W) bildenden massiven bombierten Walze als Oberwalze (1,101),
dadurch gekennzeichnet,
daß die hydraulisch innenabgestützte Walze (3,103) doppelseitig wirksam ist.

2. Kalander nach Anspruch 1, dadurch gekennzeichnet, daß bei der hydraulisch innenabgestützten Walze (3) die äußeren Belastungseinrichtungen an den Enden des Querhaupts (4) angreifen.

3. Kalander nach Anspruch 1, dadurch gekennzeichnet, daß bei der hydraulisch innenabgestützten Walze (103) die äußeren Belastungseinrichtungen (20) an den Enden (105') der Hohlwalze (105) angreifen.

4. Kalander nach Anspruch 3, dadurch gekennzeichnet, daß die Lager (6) zwischen Querhaupt (104) und Hohlwalze (105) an den gleichen Stellen, in Längsrichtung der Walze (103) gesehen, liegen wie die zur Einleitung der äußeren Kräfte dienenden äußeren Lager (16) der Hohlwalze (105).

5. Kalander nach Anspruch 3 oder 4, dadurch gekennzeichnet, daß in der Nähe der Lager (6) zwischen Querhaupt (104) und Hohlwalze (105) zur Entlastung dieser Lager (6) dienende, als halbzylinderschalenförmige Längskammern ausgebildete Seitenkammern (21,22) vorgesehen sind, die mit separat von der Einrichtung zur hydraulischen Innenabstützung temperierbarer Druckflüssigkeit beaufschlagbar sind.

6. Kalander nach einem der Ansprüche 3 bis 5, dadurch gekennzeichnet, daß die Einrichtung zur hydraulischen Innenabstützung halbzylinderschalenförmige, mit Druckflüssigkeit füllbare Längskammern (11,12) umfaßt, deren Länge (L_{K}) mit der Warenbreite (W_{B}) übereinstimmt.

## Claims

1. A calender comprising a hydraulically internally braced bottom roll (3, 103) comprising a non-rotatable beam (4, 104), a roll shell (5, 105) rotatable around the beam (4, 104) and having its ends mounted on the beam (4, 104), force-exerting devices disposed on the beam (4, 104) and acting against the inner periphery (7) of the roll shell (5, 105), and a solid convex top roll (1, 101) which co-operates with the bottom roll to form a nip (W), characterised in that the hydraulically internally braced roll (3, 103) is bilaterally active.

2. A calender according to claim 1, characterised in that in the case of the hydraulically internally braced roll (3), the outer loading devices engage the ends of the beam (4).

3. A calender according to claim 1, characterised in that, in the case of the hydraulically internally braced roll (103), the outer loading devices (20) act on the ends (105') of the roll shell (105).

4. A calender according to claim 3, characterised in that the bearings (6) between the beam (104) and the roll shell (105) are disposed at the same places, as considered in the longitudinal direction of the roll (103), as the outer bearings (16) of the roll shell (105) which are used for introducing the outer forces.

5. A calender according to claim 3 or 4, characterised in that semicylindrical shell-shaped longitudinal side chambers (21, 22) are provided near the bearings (6) between the beam (404) and the roll shell (105) for relieving the bearings (6), and can be supplied with pressure fluid which is temperature-controlled separately from the hydraulic internal bracing device.

6. A calender according to any of claims 3 to 5, characterised in that the device for internal hydraulic bracing comprises semicylindrical shell-shaped longitudinal chambers (11, 12) which can be filled with pressure fluid and have a length (L_{K}) corresponding to the width (W_{B}) of the product.

## Revendications

1. Calandre avec un cylindre à abutement intérieur hydraulique constituant le cylindre du bas (3, 103), qui comprend une traverse (4, 104) qui ne peut pas tourner, un cylindre creux (5, 105) qui peut tourner autour de la traverse (4, 104), monté aux extrémités sur la traverse (4, 104) ainsi que des dispositifs exerçant des forces disposées sur la traverse (4, 104), agissant contre l'enveloppe intérieure (7) du cylindre creux (5, 105) et avec un cylindre bombé massif, en tant que cylindre du dessus (1, 101) formant avec le précédent l'emprise (W), calandre caractérisée en ce que le cylindre (3, 103) est à abutement hydraulique et agit des deux côtés.

2. Calandre selon la revendication 1, caractérisée en ce que dans le cas du cylindre (3) à abutement intérieur hydraulique les dispositifs extérieurs de charge viennent en prise aux extrémités de la traverse (4).

3. Calandre selon la revendication 1, caractérisée en ce que dans le cas du cylindre (103) à abutement intérieur hydraulique les dispositifs extérieurs de charge (20) viennent en prise aux extrémités (105') du cylindre creux (105).

4. Calandre selon la revendication 3, caractérisée en ce que les paliers (6) se trouvent entre la traverse (104) et le cylindre creux (105) aux mêmes endroits, vu dans le sens longitudinal du cylindre, que les paliers extérieurs (16) du cylindre creux (105) servant à introduire les forces extérieures.

5. Calandre selon la revendication 3 ou 4, caractérisée en ce qu'à proximité des paliers (6) entre la traverse (104) et le cylindre creux (105), il est prévu des chambres latérales (21, 22) constituées comme des chambres longitudinales en forme de coquille semi-cylindrique servant à décharger les paliers (6), chambres latérales (21, 22) qui peuvent être soumises à l'action du liquide sous pression, dont la température peut être régulée, séparément du dispositif servant à l'abutement intérieur hydraulique.

6. Calandre selon l'une des revendications 3 à 5, caractérisée en ce que le dispositif et l'abutement intérieur hydraulique comprennent des chambres longitudinales (11, 12) en forme de coquilles semi-cylindriques, pouvant être remplies de liquide sous pression, dont la longueur (Lk) coïncide avec la largeur (Wb) de la matière.
